# EUROPEAN PATENT SPECIFICATION

(11) **EP 4 353 996 B1**
(45) Date of publication and mention of the grant of the patent: **06.08.2025**
(21) Application number: 22201288.2
(22) Date of filing: 13.10.2022
(51) Int. Cl.: F16H 61/28, F16D 27/01, B62M 25/08

(54) **CONTROL DEVICE OF INTERNAL SPEED CHANGE DEVICE OF WHEEL HUB FOR CLUTCHING OPERATION**
STEUERUNGSVORRICHTUNG FÜR INTERNE GANGWECHSELVORRICHTUNG EINER RADNABE FÜR KUPPLUNGSBETÄTIGUNG
DISPOSITIF DE COMMANDE D'UN DISPOSITIF DE CHANGEMENT DE VITESSE INTERNE D'UN MOYEU DE ROUE POUR UNE OPÉRATION D'EMBRAYAGE

(43) Date of publication of application: 17.04.2024
(73) Proprietor: NEW KAILUNG GEAR CO., LTD., Kaohsiung (TW)
(72) Inventor: LIU, JEN-CHIH, Kaohsiung (CN)
(74) Representative: Treeby, Philip David William

(56) References cited:
- CN-A- 105 605 122
- DE-A1- 102020 131 486
- US-A1- 2022 205 494
- US-A1- 2022 221 012

## Description

### FIELD OF THE INVENTION

The present invention is related to bicycles, and in particular to a control device of an internal speed change device of a wheel hub for clutching operation.

### BACKGROUND OF THE INVENTION

In prior art, speed change devices of bicycle includes exposed speed change device and internal speed change device hidden in wheel hub. Controlling of the speed change device is executed by manual way or electric way.

In the known technology of current electric speed change device, related industries invest hard works in the field of electrical controlling of speed change device to develop an ideal product with high industrial utilization and economic benefits.

Prior speed change device has electrical controlling function, while these prior arts has disadvantages of complex structure, large amount of components, high costs, heavy volume and weights. Therefore these prior arts are not an ideal solution to satisfy the requirement of high industrial utilization and economic benefits.

As a result, there is an eager demand to have a novel structure with simple structure, less components, low costs, light weights, high industrial utilization and economic benefits.

US 2022/221012 A1 discloses an interior clutch-used control mechanism comprises a driving rod being installed on a center shaft of an internal clutch; a radial control cam ring and an axial control cam ring being installed on an outer side of the center shaft; a spacing ring being installed between the radial control cam ring and the axial control cam ring; a power rotation unit being installed with a sliding ring which is used as a linking device; a plurality of axial springs being installed between an outer side of the sliding ring and the rotation unit; and an interior of the sliding ring being installed with a plurality of pins and a plurality of radial spring; the radial control cam ring and the axial control cam ring being installed at an inner side of the sliding ring.

US2022/205494 A1 discloses an interior clutch-used control mechanism comprises a driving rod being installed on a center shaft of an internal clutch; a control claw actuating seat and a rotation ring being installed at an outer side of the center shaft; the control claw actuating seat being positioned at a center of the rotation ring; an inner side of the rotation ring being installed with a plurality of upper planet power ratchet claws and lower planet power ratchet claws; a ratchet claw control panel being installed at an inner side of the upper and lower planet power ratchet claws; the ratchet claw control panel being installed with a plurality of left control claws and right control claws; and the left and right control claws being installed on the ratchet claw control panel and being driven by the ratchet claw control panel to rotate.

DE 10 2020 131486 A1 discloses a hub for a human-powered vehicle, wherein the hub has a hub axle having a central axis. A hub main portion is arranged rotatably about the central axis. A rotatable structure is rotatably arranged relative to the hub axle to transmit a driving force to the hub main portion during rotation in a first rotational direction about the central axis. An electric motor is operatively coupled to the rotatable structure for selectively rotating the rotatable structure while the rotatable structure does not transmit rotation to the hub main portion.

### SUMMARY OF THE INVENTION

Accordingly, the object of the present invention is to provide a control device of an internal speed change device of a wheel hub for clutching operation, wherein advantages of the present invention are that the present invention provides a control device of an internal speed change device of a wheel hub for clutching operation, which controls the moving of the lever by force of attraction or repulsion. The control device of the present invention also provides a simple structure, less components, low costs, light weights and high practicability. The present invention also has high safety, practicability, industrial utilization and economic benefits.

To achieve above object, the present invention provides a control device of an internal speed change device of a wheel hub for clutching operation as recited by claim 1, and a control device of an internal speed change device of a wheel hub for clutching operation as recited by claim 7. Preferred features are set out in the dependent claims.

### BRIEF DESCRIPTION OF THE DRAWINGS

Fig. 1 is a cross sectional view showing the assembly of elements of the first embodiment of the present invention and an internal speed change device of a wheel hub.
Fig. 2 is an assembly schematic view of the elements of the first embodiment of the present invention.
Fig. 3 is a cross sectional view showing the assembly of elements of the first embodiment of the present invention.
Fig. 4 is a schematic view showing the backward moving of the lever of the first embodiment of the present invention.
Fig. 5 is a schematic view showing the forward moving of the lever of the first embodiment of the present invention.
Fig. 6 is an assembly schematic view of the elements of the second to fourth embodiment of the present invention.
Fig. 7 is a schematic view showing the backward moving of the lever of the second embodiment of the present invention.
Fig. 8 is a schematic view showing the forward moving of the lever of the second embodiment of the present invention.
Fig. 9 is a schematic view showing the backward moving of the lever of the third embodiment of the present invention.
Fig. 10 is a schematic view showing the forward moving of the lever of the third embodiment of the present invention.
Fig. 11 is a schematic view showing the backward moving of the lever of the fourth embodiment of the present invention.
Fig. 12 is a schematic view showing the forward moving of the lever of the fourth embodiment of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope of the present invention defined in the appended claims.

The present invention provides a control device of an internal speed change device of a wheel hub for clutching operation. In application, the control device is installed in the internal speed change device of the wheel hub, which serves to control the clutching of the internal speed change device through axial moving of a lever. The axial moving of the lever is controlled by force of attraction or repulsion of the control device.

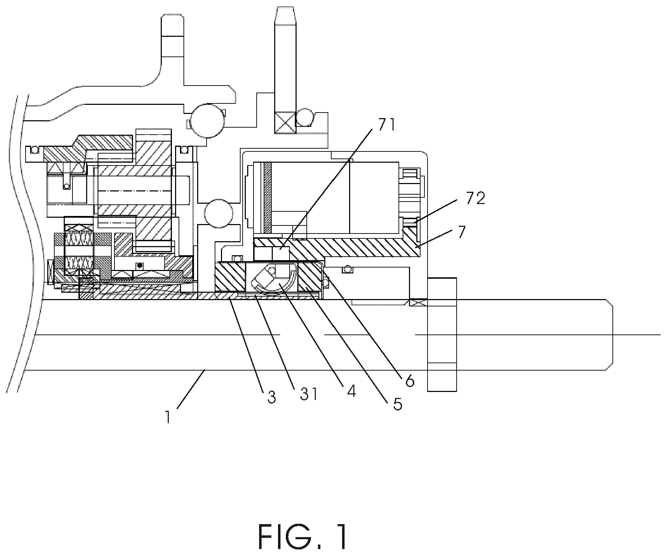

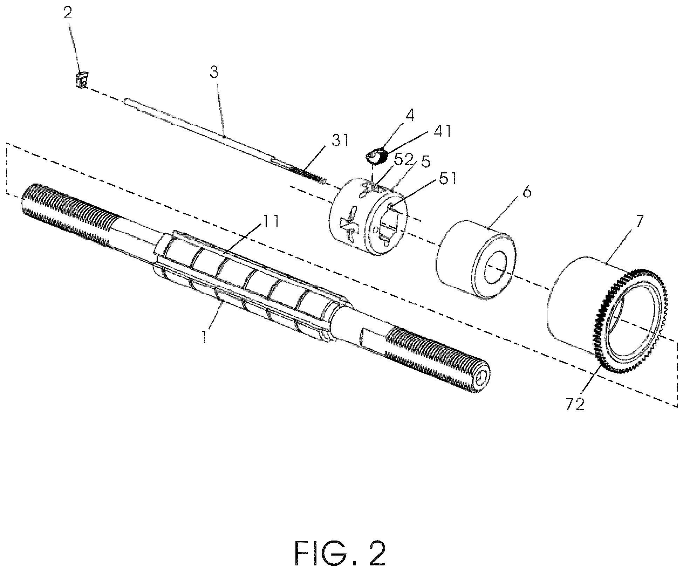

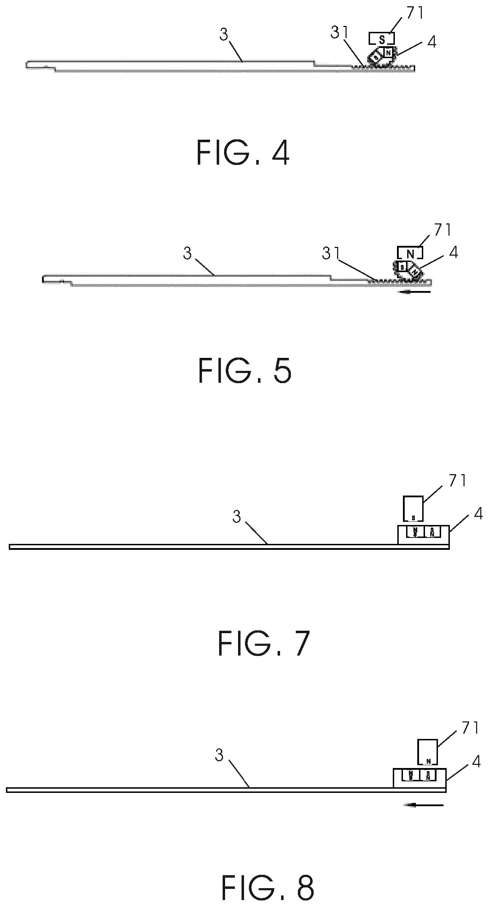

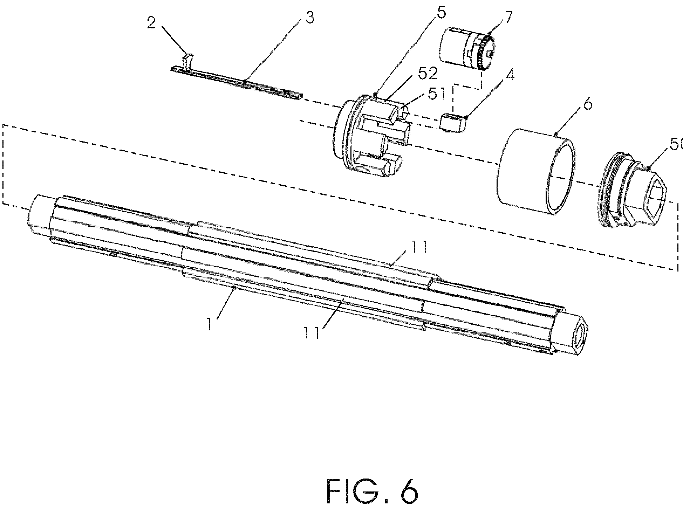

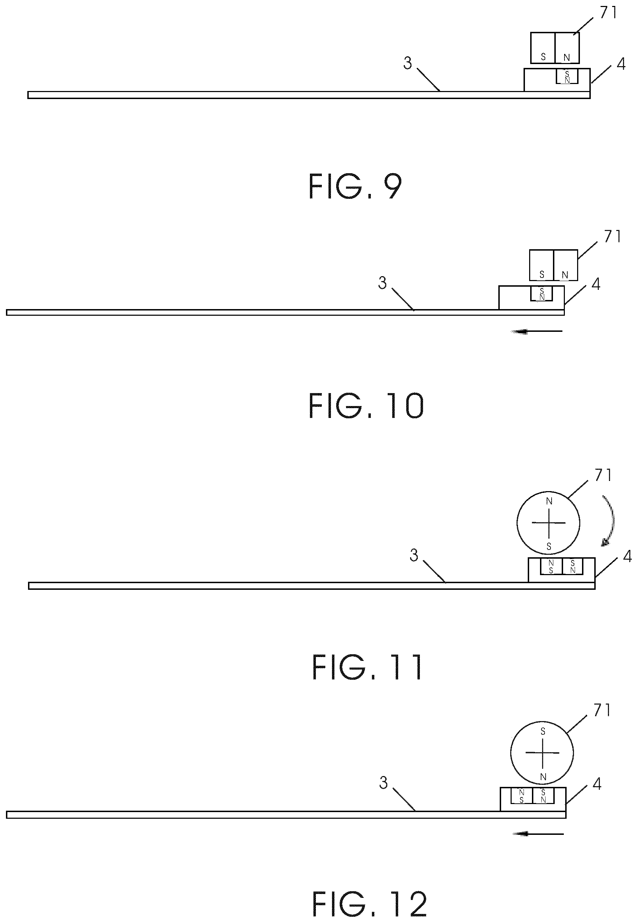

With reference to Figs. 1 to 5, the structure of the first embodiment of the present invention is illustrated. Figs 7 to 8 show the second embodiment of the present invention. Figs 9 to 10 show the third embodiment of the present invention. Figs 11 to 12 show the fourth embodiment of the present invention. Fig. 6 shows an assembly schematic view of the elements of the second to fourth embodiment of the present invention. All embodiments use common features to achieve special effects. The present invention comprises a rod 1, a controlling claw sliding block 2, a lever 3, an electric sliding block 4, a lever sleeve 5, an electric bushing 6 and a controlling ring 7. The lever 3 is installed on the rod 1. The lever 3 is connected to a controlling claw sliding block 2. The electric sliding block 4 is installed on a lever sleeve 5. The lever sleeve 5 serves to receive a back end of the lever 3. The back end of the lever 3 connects to the electric sliding block 4. The electric bushing 6 is located at an outer side of the lever sleeve 5. The controlling ring 7 is located at an outer side of the electric bushing 6. Force of attraction or repulsion between the controlling ring 7 and the electric sliding block 4 drives the electric sliding block 4 to rotate or move axially so as to drive the lever 3 to move axially. Moving of the lever 3 drives the controlling claw sliding block 2 to control the clutching of an internal speed change device.

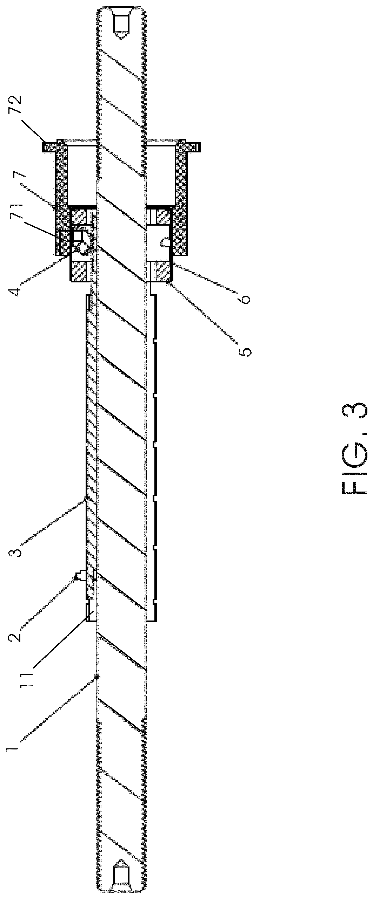

Referring to Figs. 1 to 5, it shows the first embodiment of the present invention, wherein the electric sliding block 4 is rotatable by a swinging way. The rod 1 has a guiding groove 11 which extends along a direction of a center axis of the rod 1. The lever 3 is installed in the guiding groove 11 of the rod 1. The controlling claw sliding block 2 extends from a front end of the lever 3. A back end of the lever 3 forms teethed strip 31. At least one guiding notch 51 is formed at an inner side of the lever sleeve 5. The back end of the lever 3 extends into one of the at least one guiding notch 51. At least one installing hole 52 is formed on the lever sleeve 5 and the installing hole 52 connects the respective guiding notch 51. The electric sliding block 4 is engaged to the teethed strip 31 of the lever 3. The electric sliding block 4 is installed in one of the at least one installing hole 52. Referring to Fig. 3, the electric sliding block 4 has a teethed surface 41 engaged to the teethed strip 31 of the lever 3. The electric sliding block 4 is installed with a second magnetic unit 42 which has an S pole and an N pole. The second magnetic unit 42 is a permanent magnet.

The controlling ring 7 surrounds an outer side of the lever sleeve 5. The electric bushing 6 surrounds the outer side of the lever sleeve 5. The controlling ring 7 surrounds an outer side of the electric bushing 6. The controlling ring 7 is rotatable. The rod 1 pass through the lever sleeve 5. An inner side of the controlling ring 7 is installed with a first magnetic unit 71 which has an S pole and an N pole. The first magnetic unit 71 is a permanent magnet or an electromagnet. An outer side of the controlling ring 7 is installed with a gear 72. When the gear 72 is driven to rotate with a predetermined angle by an external force, the controlling ring 7 rotates synchronously with the predetermined angle. When the controlling ring 7 rotates to move the S pole or the N pole of the first magnetic unit 71 to a positon locating the electric sliding block 4, a force of attraction or repulsion between the first magnetic unit 71 and the second magnetic unit 42 drives the electric sliding block 4 to move so that the N pole or the S pole of the second magnetic unit 42 attracts a respective one of the S pole and the N pole of the first magnetic unit 71.

Fig. 4 shows the first embodiment of the present invention. When the controlling ring 7 rotates with the predetermined angle to rotate the S pole of the first magnetic unit 71 to a position locating the second magnetic unit 42 of the electric sliding block 4, the electric sliding block 4 is driven to rotate counterclockwise by a force of attraction or repulsion between the S pole of the first magnetic unit 71 and the second magnetic unit 42 so as to drive the lever 3 to move backwards horizontally along an axial direction by the teethed surface 41 of the electric sliding block 4.

Referring to Fig. 5, when the controlling ring 7 rotates successively with the predetermined angle to rotate the N pole of the first magnetic unit 71 to a position locating the second magnetic unit 42 of the electric sliding block 4, the electric sliding block 4 is driven to rotate clockwise by a force of attraction or repulsion between the N pole of the first magnetic unit 71 and the second magnetic unit 42 so as to drive the lever 3 to move forwards horizontally along an axial direction by the teethed surface 41 of the electric sliding block 4.

Referring to Figs. 6, 7and 8, it shows the second embodiment of the present invention, wherein the electric sliding block 4 is linear movable. In this embodiment, those elements identical to those in the first embodiment are illustrated by the same numerals and they have the same functions and effects. Therefore, the details will not be further described herein. Only the difference there between are described herein.

The second embodiment has a linear driving structure, wherein the controlling ring 7 has a unipolar magnetic structure and the electric sliding block 4 has a bipolar magnetic structure.

The lever 3 is installed on the rod 1. The lever 3 is connected to a controlling claw sliding block 2. The electric sliding block 4 is installed on a lever sleeve 5. The lever sleeve 5 serves to receive a back end of the lever 3. The back end of the lever 3 connects to the electric sliding block 4. The electric bushing 6 is located at an outer side of the lever sleeve 5. The controlling ring 7 is located at an outer side of the electric bushing 6. Force of attraction or repulsion between the controlling ring 7 and the electric sliding block 4 drives the electric sliding block 4 to move axially to drive the lever 3 move axially. Moving of the lever 3 drives the controlling claw sliding block 2 to control the clutching of an internal speed change device.

Referring to Fig. 7, the rod 1 has a guiding groove 11 which extends along a direction of a center axis of the rod 1. The lever 3 is installed in the guiding groove 11 of the rod 1. The controlling claw sliding block 2 extends from a front end of the lever 3. At least one guiding notch 51 formed at an inner side of the lever sleeve 5. The back end of the lever 3 extends into one of the at least one guiding notch 51. At least one installing hole 52 is formed on the lever sleeve 5 and the installing hole 52 connects the respective guiding notch 51. In the second embodiment, the electric sliding block 4 is fixed on the back end of the lever 3 and is located in the guiding notch 51 and one of the at least one installing hole 52. An outer side of the at least one installing hole 52 is closed by a sleeve cover 50.

When the controlling ring 7 rotates with the predetermined angle to rotate the S pole of the first magnetic unit 71 to a position locating the second magnetic unit 42 of the electric sliding block 4, the electric sliding block 4 is driven to move backwards by a force of attraction or repulsion between the S pole of the first magnetic unit 71 and the second magnetic unit 42 so as to drive the lever 3 to move backwards horizontally along an axial direction.

Referring to Fig. 8, when the controlling ring 7 rotates successively with the predetermined angle to rotate the N pole of the first magnetic unit 71 to a position locating the second magnetic unit 42 of the electric sliding block 4, the electric sliding block 4 is driven to move forwards by a force of attraction or repulsion between the N pole of the first magnetic unit 71 and the second magnetic unit 42 so as to drive the lever 3 to move forwards horizontally along an axial direction.

Referring to Figs. 6, 9 and 10, it shows the third embodiment of the present invention, wherein the electric sliding block 4 is linear movable. In this embodiment, those elements identical to those in the first embodiment are illustrated by the same numerals and they have the same functions and effects. Therefore, the details will not be further described herein. Only the difference there between are described herein.

The third embodiment has a linear driving structure, wherein the controlling ring 7 has a bipolar magnetic structure and the electric sliding block 4 has a unipolar magnetic structure.

In this embodiment, when the controlling ring 7 rotates with the predetermined angle to rotate the N pole or the S pole of the first magnetic unit 71 to a position locating the second magnetic unit 42 of the electric sliding block 4, the electric sliding block 4 is driven to move forwards or backwards by a force of attraction or repulsion between the first magnetic unit 71 and the second magnetic unit 42 so as to drive the lever 3 to move forwards or backwards horizontally along an axial direction.

Referring to Figs. 6, 11 and 12, it shows the fourth embodiment of the present invention, wherein the electric sliding block 4 is linear movable. In this embodiment, those elements identical to those in the first embodiment are illustrated by the same numerals and they have the same functions and effects. Therefore, the details will not be further described herein. Only the difference there between are described herein.

The fourth embodiment has a linear driving structure, wherein the controlling ring 7 has a bipolar magnetic structure and the electric sliding block 4 has a bipolar magnetic structure.

In this embodiment, when the controlling ring 7 rotates with the predetermined angle to rotate the N pole or the S pole of the first magnetic unit 71 to a position locating the second magnetic unit 42 of the electric sliding block 4, the electric sliding block 4 is driven to move forwards or backwards by a force of attraction or repulsion between the first magnetic unit 71 and the second magnetic unit 42 so as to drive the lever 3 to move forwards or backwards horizontally along an axial direction.

Therefore, in the first to fourth embodiments of the present invention, the axial moving of the lever 3 is caused by rotation or axial moving of the electric sliding block 4 which is driven by force of attraction or repulsion between the controlling ring 7 and the electric sliding block 4. As a result, the lever 3 is driven to move forwards or backwards horizontally along an axial direction so as to drive the controlling claw sliding block 2 to control the clutching of an internal speed change device.

Advantages of the present invention are that the present invention provides a control device of an internal speed change device of a wheel hub for clutching operation, which controls the moving of the lever by force of attraction or repulsion. The control device of the present invention also provides a simple structure, less components, low costs, light weights and high practicability. The present invention also has high safety, practicability, industrial utilization and economic benefits.

## Claims

1. A control device of an internal speed change device of a wheel hub for clutching operation comprising:
a rod (1);
a lever (3) installed on the rod (1); the lever (3) being connected to a controlling claw sliding block (2); the rod (1) having a guiding groove (11) which extends along a direction of a center axis of the rod (1); the lever (3) being installed in the guiding groove (11) of the rod (1) and being capable of moving forwards or backwards axially;
an electric sliding block (4) installed on a lever sleeve (5), the lever sleeve (5) serving to receive a back end of the lever (3); wherein a guiding notch (51) is formed at an inner side of the lever sleeve (5), the back end of the lever (3) extending into the guiding notch (51); the back end of the lever (3) forming a teethed strip (31); wherein an installing hole (52) is formed on the lever sleeve (5) and the installing hole (52) is connected to the guiding notch (51); the electric sliding block (4) being installed in the installing hole (52); the electric sliding block (4) having a teethed surface (41) engaged to the teethed strip (31) of the lever (3); the electric sliding block (4) being installed with a second magnetic unit (42);
an electric bushing (6) located at an outer side of the lever sleeve (5);
a controlling ring (7) located at an outer side of the electric bushing (6); an inner side of the controlling ring (7) being installed with a first magnetic unit (71); an outer side of the controlling ring (7) being installed with a gear (72); and
wherein the electric sliding block (4) is rotatable;
wherein the controlling ring (7), the electric sliding block (4), the lever (3) and the controlling claw sliding block (2) are configured such that, when the gear (72) is driven to rotate by an external force, the controlling ring (7) rotates synchronously, force of attraction or repulsion between the first magnetic unit (71) of the controlling ring (7) and the second magnetic unit (42) of the electric sliding block (4) drives the electric sliding block (4) to rotate so as to drive the lever (3) to move forwards or backwards axially, and moving of the lever (3) drives the controlling claw sliding block (2) to control clutching of the internal speed change device.

2. The control device of the internal speed change device of the wheel hub for clutching operation as claimed in claim 1, wherein the controlling claw sliding block (2) extends from a front end of the lever (3).

3. The control device of the internal speed change device of the wheel hub for clutching operation as claimed in claim 1, wherein the second magnetic unit (42) is a permanent magnet which has an S pole and an N pole.

4. The control device of the internal speed change device of the wheel hub for clutching operation as claimed in claim 1, wherein the first magnetic unit (71) is a permanent magnet or an electromagnet which has an S pole and an N pole.

5. The control device of the internal speed change device of the wheel hub for clutching operation as claimed in claim 1, wherein the electric bushing (6) surrounds the outer side of the lever sleeve (5); and the controlling ring (7) surrounds the outer side of the electric bushing (6).

6. The control device of the internal speed change device of the wheel hub for clutching operation as claimed in claim 4,
wherein the electric sliding block (4) is configured to be driven, when the controlling ring (7) rotates with a predetermined angle to rotate the S pole of the first magnetic unit (71) to a position locating the second magnetic unit (42) of the electric sliding block (4), to rotate counterclockwise by a magnetic force between the S pole of the first magnetic unit (71) and the second magnetic unit (42) so as to drive the lever (3) to move backwards along an axial direction by the teethed surface (41) of the electric sliding block (4); and
wherein the electric sliding block (4) is configured to be driven, when the controlling ring (7) rotates continuously with the predetermined angle to rotate the N pole of the first magnetic unit (71) to a position locating the second magnetic unit 42 of the electric sliding block (4), to rotate clockwise by a force of attraction or repulsion between the N pole of the first magnetic unit (71) and the second magnetic unit (42) so as to drive the lever (3) to move forwards along the axial direction by the teethed surface (41) of the electric sliding block (4).

7. A control device of an internal speed change device of a wheel hub for clutching operation comprising:
a rod (1);
a lever (3) installed on the rod (1); the lever (3) being connected to a controlling claw sliding block (2); the rod (1) having a guiding groove (11) which extends along a direction of a center axis of the rod (1); the lever (3) being installed in the guiding groove (11) of the rod (1) and being capable of moving forwards or backwards axially;
an electric sliding block (4) installed on a lever sleeve (5), the lever sleeve (5) serving to receive a back end of the lever (3); wherein the back end of the lever is connected to the electric sliding block (4); wherein a guiding notch (51) is formed at an inner side of the lever sleeve (5), the back end of the lever (3) extending into the guiding notch (51); wherein an installing hole (52) is formed on the lever sleeve (5) and the installing hole (52) is connected to the guiding notch (51); and the electric sliding block (4) being fixed on the back end of the lever (3) and being located in the guiding notch (51) and the installing hole (52); the electric sliding block (4) being installed with a second magnetic unit (42);
an electric bushing (6) located at an outer side of the lever sleeve (5);
a controlling ring (7) located at an outer side of the electric bushing (6); an inner side of the controlling ring (7) being installed with a first magnetic unit (71); an outer side of the controlling ring (7) being installed with a gear (72); and
wherein the electric sliding block (4) is linear movable;
wherein the controlling ring (7), the electric sliding block (4), the lever (3) and the controlling claw sliding block (2) are configured such that, when the gear (72) is driven to rotate by an external force, the controlling ring (7) rotates synchronously, force of attraction or repulsion between the first magnetic unit (71) of the controlling ring (7) and the second magnetic unit (42) of the electric sliding block (4) drives the electric sliding block (4) to move axially so as to drive the lever (3) to move forwards or backwards axially, and moving of the lever (3) drives the controlling claw sliding block (2) to control clutching of the internal speed change device.

8. The control device of the internal speed change device of the wheel hub for clutching operation as claimed in claim 7, wherein the second magnetic unit (42) is a permanent magnet which has an S pole and an N pole.

9. The control device of the internal speed change device of the wheel hub for clutching operation as claimed in claim 7, wherein the first magnetic unit (71) is a permanent magnet or an electromagnet which has an S pole and an N pole.

10. The control device of the internal speed change device of the wheel hub for clutching operation as claimed in claim 7, wherein the controlling claw sliding block (2) extends from a front end of the lever (3);

11. The control device of the internal speed change device of the wheel hub for clutching operation as claimed in claim 7, wherein the electric bushing (6) surrounds the outer side of the lever sleeve (5).

12. The control device of the internal speed change device of the wheel hub for clutching operation as claimed in claim 9,
wherein the electric sliding block (4) is configured to be driven, when the controlling ring (7) rotates with a predetermined angle to rotate the S pole of the first magnetic unit (71) to a position locating the second magnetic unit (42) of the electric sliding block (4), to move backwards by a force of attraction or repulsion between the S pole of the first magnetic unit (71) and the second magnetic unit (42) so as to drive the lever (3) to move backwards along an axial direction; and
wherein the electric sliding block (4) is configured to be driven, when the controlling ring (7) rotates successively with the predetermined angle to rotate the N pole of the first magnetic unit (71) to a position locating the second magnetic unit (42) of the electric sliding block (4), to move forwards by a force of attraction or repulsion between the N pole of the first magnetic unit (71) and the second magnetic unit (42) so as to drive the lever (s3) to move forwards along the axial direction.

13. The control device of the internal speed change device of the wheel hub for clutching operation as claimed in claim 7, wherein an outer side of the at least one installing hole (52) is closed by a sleeve cover (50).

## Patentansprüche

1. Steuervorrichtung für eine in eine Radnabe eingebaute Gangschaltvorrichtung zur Kupplungsbetätigung mit Folgendem:
einer Stange (1),
einem an der Stange (1) installierten Hebel (3), wobei der Hebel (3) mit einem Steuerklauengleitschuh (2) verbunden ist, wobei die Stange (1) eine Führungsnut (11) aufweist, die sich in einer Richtung einer Mittelachse der Stange (1) erstreckt, wobei der Hebel (3) in der Führungsnut (11) der Stange (1) installiert ist und sich axial nach vorn oder nach hinten bewegen kann,
einem elektrischen Gleitschuh (4), der an einer Hebelmuffe (5) installiert ist, wobei die Hebelmuffe (5) dazu dient, ein hinteres Ende des Hebels (3) aufzunehmen, wobei an einer Innenseite der Hebelmuffe (5) eine Führungskerbe (51) ausgebildet ist, sich das hintere Ende des Hebels (3) in die Führungskerbe (51) hinein erstreckt und das hintere Ende des Hebels (3) eine Zahnstange (31) bildet, wobei an der Hebelmuffe (5) ein Installationsloch (52) ausgebildet und das Installationsloch (52) mit der Führungskerbe (51) verbunden ist, wobei der elektrische Gleitschuh (4) in dem Installationsloch (52) installiert ist, der elektrische Gleitschuh (4) eine gezahnte Oberfläche (41) aufweist, die in die Zahnstange (31) des Hebels (3) eingreift, wobei an dem elektrischen Gleitschuh (4) eine zweite Magneteinheit (42) installiert ist,
einer elektrischen Buchse (6), die sich an einer Außenseite der Hebelmuffe (5) befindet, einem Steuerring (7), der sich an einer Außenseite der elektrischen Buchse (6) befindet, wobei an einer Innenseite des Steuerrings (7) eine erste Magneteinheit (71) und an einer Außenseite des Steuerrings (7) ein Zahnrad (72) installiert ist, und
wobei der elektrische Gleitschuh (4) drehbar ist,
wobei der Steuerring (7), der elektrische Gleitschuh (4), der Hebel (3) und der Steuerklauengleitschuh (2) so ausgelegt sind, dass sich, wenn das Zahnrad (72) durch eine externe Kraft in Drehung versetzt wird, gleichzeitig der Steuerring (7) dreht, eine Anziehungs- oder Abstoßungskraft zwischen der ersten Magneteinheit (71) des Steuerrings (7) und der zweiten Magneteinheit (42) des elektrischen Gleitschuhs (4) den elektrischen Gleitschuh (4) in Drehung versetzt und so den Hebel (3) dazu veranlasst, sich axial nach vorn oder nach hinten zu bewegen, und eine Bewegung des Hebels (3) den Steuerklauengleitschuh (2) dazu veranlasst, ein Kuppeln der eingebauten Gangschaltvorrichtung zu steuern.

2. Steuervorrichtung für die in die Radnabe eingebaute Gangschaltvorrichtung zur Kupplungsbetätigung nach Anspruch 1, wobei sich der Steuerklauengleitschuh (2) von einem vorderen Ende des Hebels (3) aus erstreckt.

3. Steuervorrichtung für die in die Radnabe eingebaute Gangschaltvorrichtung zur Kupplungsbetätigung nach Anspruch 1, wobei es sich bei der zweiten Magneteinheit (42) um einen Permanentmagneten mit einem S-Pol und einem N-Pol handelt.

4. Steuervorrichtung für die in die Radnabe eingebaute Gangschaltvorrichtung zur Kupplungsbetätigung nach Anspruch 1, wobei es sich bei der ersten Magneteinheit (71) um einen Permanentmagneten oder einen Elektromagneten mit einem S-Pol und einem N-Pol handelt.

5. Steuervorrichtung für die in die Radnabe eingebaute Gangschaltvorrichtung zur Kupplungsbetätigung nach Anspruch 1, wobei die elektrische Buchse (6) die Außenseite der Hebelmuffe (5) und der Steuerring (7) die Außenseite der elektrischen Buchse (6) umgibt.

6. Steuervorrichtung für die in die Radnabe eingebaute Gangschaltvorrichtung zur Kupplungsbetätigung nach Anspruch 4,
wobei der elektrische Gleitschuh (4) so ausgelegt ist, dass er sich, wenn sich der Steuerring (7) in einem vorgegebenen Winkel dreht und so den S-Pol der ersten Magneteinheit (71) in eine Position der zweiten Magneteinheit (42) des elektrischen Gleitschuhs (4) dreht, durch eine Magnetkraft zwischen dem S-Pol der ersten Magneteinheit (71) und der zweiten Magneteinheit (42) entgegen dem Uhrzeigersinn dreht und so den Hebel (3) über die gezahnte Fläche (41) des elektrischen Gleitschuhs (4) in axialer Richtung nach hinten bewegt, und
wobei der elektrische Gleitschuh (4) so ausgelegt ist, dass er sich, wenn sich der Steuerring (7) kontinuierlich in dem vorgegebenen Winkel dreht und so den N-Pol der ersten Magneteinheit (71) in eine Position der zweiten Magneteinheit (42) des elektrischen Gleitschuhs (4) dreht, durch eine Anziehungs- oder Abstoßungskraft zwischen dem N-Pol der ersten Magneteinheit (71) und der zweiten Magneteinheit (42) im Uhrzeigersinn dreht und so den Hebel (3) über die gezahnte Fläche (41) des elektrischen Gleitschuhs (4) in axialer Richtung nach vorn bewegt.

7. Steuervorrichtung für eine in eine Radnabe eingebaute Gangschaltvorrichtung zur Kupplungsbetätigung mit Folgendem:
einer Stange (1),
einem an der Stange (1) installierten Hebel (3), wobei der Hebel (3) mit einem Steuerklauengleitschuh (2) verbunden ist, wobei die Stange (1) eine Führungsnut (11) aufweist, die sich in einer Richtung einer Mittelachse der Stange (1) erstreckt, wobei der Hebel (3) in der Führungsnut (11) der Stange (1) installiert ist und sich axial nach vorn oder nach hinten bewegen kann,
einem elektrischen Gleitschuh (4), der an einer Hebelmuffe (5) installiert ist, wobei die Hebelmuffe (5) dazu dient, ein hinteres Ende des Hebels (3) aufzunehmen, wobei das hintere Ende des Hebels mit dem elektrischen Gleitschuh (4) verbunden ist, wobei an einer Innenseite der Hebelmuffe (5) eine Führungskerbe (51) ausgebildet ist, sich das hintere Ende des Hebels (5) in die Führungskerbe (51) hinein erstreckt, wobei an der Hebelmuffe (5) ein Installationsloch (52) ausgebildet und das Installationsloch (52) mit der Führungskerbe (51) verbunden ist, und der elektrische Gleitschuh (4) am hinteren Ende des Hebels (3) befestigt ist und sich in der Führungskerbe (51) und dem Installationsloch (52) befindet, wobei an dem elektrischen Gleitschuh (4) eine zweite Magneteinheit (42) installiert ist,
einer elektrischen Buchse (6), die sich an einer Außenseite der Hebelmuffe (5) befindet, einem Steuerring (7), der sich an einer Außenseite der elektrischen Buchse (6) befindet, wobei an einer Innenseite des Steuerrings (7) eine erste Magneteinheit (71) und an einer Außenseite des Steuerrings (7) ein Zahnrad (72) installiert ist, und
wobei der elektrische Gleitschuh (4) linear beweglich ist,
wobei der Steuerring (7), der elektrische Gleitschuh (4), der Hebel (3) und der Steuerklauengleitschuh (2) so ausgelegt sind, dass sich, wenn das Zahnrad (72) durch eine externe Kraft in Drehung versetzt wird, gleichzeitig der Steuerring (7) dreht, eine Anziehungs- oder Abstoßungskraft zwischen der ersten Magneteinheit (71) des Steuerrings (7) und der zweiten Magneteinheit (42) des elektrischen Gleitschuhs (4) den elektrischen Gleitschuh (4) axial in Bewegung versetzt und so den Hebel (3) dazu veranlasst, sich axial nach vorn oder nach hinten zu bewegen, und eine Bewegung des Hebels (3) den Steuerklauengleitschuh (2) dazu veranlasst, ein Kuppeln der eingebauten Gangschaltvorrichtung zu steuern.

8. Steuervorrichtung für die in die Radnabe eingebaute Gangschaltvorrichtung zur Kupplungsbetätigung nach Anspruch 7, wobei es sich bei der zweiten Magneteinheit (42) um einen Permanentmagneten mit einem S-Pol und einem N-Pol handelt.

9. Steuervorrichtung für die in die Radnabe eingebaute Gangschaltvorrichtung zur Kupplungsbetätigung nach Anspruch 7, wobei es sich bei der ersten Magneteinheit (71) um einen Permanentmagneten oder einen Elektromagneten mit einem S-Pol und einem N-Pol handelt.

10. Steuervorrichtung für die in die Radnabe eingebaute Gangschaltvorrichtung zur Kupplungsbetätigung nach Anspruch 7, wobei sich der Steuerklauengleitschuh (2) von einem vorderen Ende des Hebels (3) aus erstreckt.

11. Steuervorrichtung für die in die Radnabe eingebaute Gangschaltvorrichtung zur Kupplungsbetätigung nach Anspruch 7, wobei die elektrische Buchse (6) die Außenseite der Hebelmuffe (5) umgibt.

12. Steuervorrichtung für die in die Radnabe eingebaute Gangschaltvorrichtung zur Kupplungsbetätigung nach Anspruch 9,
wobei der elektrische Gleitschuh (4) so ausgelegt ist, dass er sich, wenn sich der Steuerring (7) in einem vorgegebenen Winkel dreht und so den S-Pol der ersten Magneteinheit (71) in eine Position der zweiten Magneteinheit (42) des elektrischen Gleitschuhs (4) dreht, durch eine Anziehungs- oder Abstoßungskraft zwischen dem S-Pol der ersten Magneteinheit (71) und der zweiten Magneteinheit (42) nach hinten bewegt und so den Hebel (3) in axialer Richtung nach hinten bewegt, und
wobei der elektrische Gleitschuh (4) so ausgelegt ist, dass er sich, wenn sich der Steuerring (7) danach in dem vorgegebenen Winkel dreht und so den N-Pol der ersten Magneteinheit (71) in eine Position der zweiten Magneteinheit (42) des elektrischen Gleitschuhs (4) dreht, durch eine Anziehungs- oder Abstoßungskraft zwischen dem N-Pol der ersten Magneteinheit (71) und der zweiten Magneteinheit (42) nach vorn bewegt und so den Hebel (s3) in axialer Richtung nach vorn bewegt.

13. Steuervorrichtung für die in die Radnabe eingebaute Gangschaltvorrichtung zur Kupplungsbetätigung nach Anspruch 7, wobei eine Außenseite des mindestens einen Installationslochs (52) mit einer Muffenkappe (50) verschlossen ist.

## Revendications

1. Dispositif de commande d'un dispositif de changement de vitesse interne d'un moyeu de roue pour une opération d'embrayage comportant :
une tige (1) ;
un levier (3) installé sur la tige (1) ; le levier (3) étant relié à un coulisseau à griffes de commande (2) ; la tige (1) ayant une rainure de guidage (11) qui s'étend le long d'une direction d'un axe central de la tige (1) ; le levier (3) étant installé dans la rainure de guidage (11) de la tige (1) et étant en mesure de se déplacer vers l'avant ou vers l'arrière dans une direction axiale ;
un coulisseau électrique (4) installé sur un manchon de levier (5), le manchon de levier (5) servant à recevoir une extrémité arrière du levier (3) ; dans lequel une encoche de guidage (51) est formée au niveau d'un côté intérieur du manchon de levier (5), l'extrémité arrière du levier (3) s'étendant jusque dans l'encoche de guidage (51) ; l'extrémité arrière du levier (3) formant une bande dentée (31) ; dans lequel un trou d'installation (52) est formé sur le manchon de levier (5) et le trou d'installation (52) est relié à l'encoche de guidage (51) ; le coulisseau électrique (4) étant installé dans le trou d'installation (52) ; le coulisseau électrique (4) ayant une surface dentée (41) mise en prise sur la bande dentée (31) du levier (3) ; le coulisseau électrique (4) étant équipé d'une deuxième unité magnétique (42) ;
une traversée électrique (6) située au niveau d'un côté extérieur du manchon de levier (5) ;
une bague de commande (7) située au niveau d'un côté extérieur de la traversée électrique (6) ; un côté intérieur de la bague de commande (7) étant équipé d'une première unité magnétique (71) ; un côté extérieur de la bague de commande (7) étant équipé d'un engrenage (72) ; et
dans lequel le coulisseau électrique (4) est rotatif ;
dans lequel la bague de commande (7), le coulisseau électrique (4), le levier (3) et le coulisseau à griffes de commande (2) sont configurés de telle sorte que, lorsque l'engrenage (72) est entraînée à des fins de rotation sous l'effet d'une force externe, la bague de commande (7) tourne de manière synchrone, une force d'attraction ou de répulsion entre la première unité magnétique (71) de la bague de commande (7) et la deuxième unité magnétique (42) du coulisseau électrique (4) entraîne le coulisseau électrique (4) à des fins de rotation de manière à entraîner le levier (3) à se déplacer vers l'avant ou vers l'arrière dans une direction axiale, et le déplacement du levier (3) entraîne le coulisseau à griffes de commande (2) à des fins de commande de l'embrayage du dispositif de changement de vitesse interne.

2. Dispositif de commande du dispositif de changement de vitesse interne du moyeu de roue pour une opération d'embrayage selon la revendication 1, dans lequel le coulisseau à griffes de commande (2) s'étend depuis une extrémité avant du levier (3).

3. Dispositif de commande du dispositif de changement de vitesse interne du moyeu de roue pour une opération d'embrayage selon la revendication 1, dans lequel la deuxième unité magnétique (42) est un aimant permanent qui a un pôle S et un pôle N.

4. Dispositif de commande du dispositif de changement de vitesse interne du moyeu de roue pour une opération d'embrayage selon la revendication 1, dans lequel la première unité magnétique (71) est un aimant permanent ou un électroaimant qui a un pôle S et un pôle N.

5. Dispositif de commande du dispositif de changement de vitesse interne du moyeu de roue pour une opération d'embrayage selon la revendication 1, dans lequel la traversée électrique (6) entoure le côté extérieur du manchon de levier (5) ; et la bague de commande (7) entoure le côté extérieur de la traversée électrique (6).

6. Dispositif de commande du dispositif de changement de vitesse interne du moyeu de roue pour une opération d'embrayage selon la revendication 4,
dans lequel le coulisseau électrique (4) est configuré pour être entraîné, lorsque la bague de commande (7) tourne selon un angle prédéterminé pour faire tourner le pôle S de la première unité magnétique (71) jusque sur une position localisant la deuxième unité magnétique (42) du coulisseau électrique (4), à des fins de rotation dans le sens inverse des aiguilles d'une montre sous l'effet d'une force magnétique entre le pôle S de la première unité magnétique (71) et la deuxième unité magnétique (42) afin d'entraîner le levier (3) à se déplacer vers l'arrière le long d'une direction axiale par la surface dentée (41) du coulisseau électrique (4) ; et
dans lequel le coulisseau électrique (4) est configuré pour être entraîné, lorsque la bague de commande (7) tourne en continu selon l'angle prédéterminé pour faire tourner le pôle N de la première unité magnétique (71) jusque sur une position localisant la deuxième unité magnétique (42) du coulisseau électrique (4), à des fins de rotation dans le sens des aiguilles d'une montre sous l'effet d'une force d'attraction ou de répulsion entre le pôle N de la première unité magnétique (71) et la deuxième unité magnétique (42) afin d'entraîner le levier (3) à se déplacer vers l'avant le long d'une direction axiale par la surface dentée (41) du coulisseau électrique (4).

7. Dispositif de commande d'un dispositif de changement de vitesse interne d'un moyeu de roue pour une opération d'embrayage comportant :
une tige (1) ;
un levier (3) installé sur la tige (1) ; le levier (3) étant relié à un coulisseau à griffes de commande (2) ; la tige (1) ayant une rainure de guidage (11) qui s'étend le long d'une direction d'un axe central de la tige (1) ; le levier (3) étant installé dans la rainure de guidage (11) de la tige (1) et étant en mesure de se déplacer vers l'avant ou vers l'arrière dans une direction axiale ;
un coulisseau électrique (4) installé sur un manchon de levier (5), le manchon de levier (5) servant à recevoir une extrémité arrière du levier (3) ; dans lequel l'extrémité arrière du levier est reliée au coulisseau électrique (4) ; dans lequel une encoche de guidage (51) est formée au niveau d'un côté intérieur du manchon de levier (5), l'extrémité arrière du levier (3) s'étendant jusque dans l'encoche de guidage (51) ; dans lequel un trou d'installation (52) est formé sur le manchon de levier (5) et le trou d'installation (52) est relié à l'encoche de guidage (51) ; et le coulisseau électrique (4) étant fixé sur l'extrémité arrière du levier (3) et étant situé dans l'encoche de guidage (51) et dans le trou d'installation (52) ; le coulisseau électrique (4) étant équipé d'une deuxième unité magnétique (42) ;
une traversée électrique (6) située au niveau d'un côté extérieur du manchon de levier (5) ;
une bague de commande (7) située au niveau d'un côté extérieur de la traversée électrique (6) ; un côté intérieur de la bague de commande (7) étant équipé d'une première unité magnétique (71) ; un côté extérieur de la bague de commande (7) étant équipé d'un engrenage (72) ; et
dans lequel le coulisseau électrique (4) est mobile dans une direction linéaire ;
dans lequel la bague de commande (7), le coulisseau électrique (4), le levier (3) et le coulisseau à griffes de commande (2) sont configurés de telle sorte que, lorsque l'engrenage (72) est entraînée à des fins de rotation sous l'effet d'une force externe, la bague de commande (7) tourne de manière synchrone, une force d'attraction ou de répulsion entre la première unité magnétique (71) de la bague de commande (7) et la deuxième unité magnétique (42) du coulisseau électrique (4) entraîne le coulisseau électrique (4) à se déplacer dans une direction axiale de manière à entraîner le levier (3) à se déplacer vers l'avant ou vers l'arrière dans une direction axiale, et le déplacement du levier (3) entraîne le coulisseau à griffes de commande (2) à des fins de commande de l'embrayage du dispositif de changement de vitesse interne.

8. Dispositif de commande du dispositif de changement de vitesse interne du moyeu de roue pour une opération d'embrayage selon la revendication 7, dans lequel la deuxième unité magnétique (42) est un aimant permanent qui a un pôle S et un pôle N.

9. Dispositif de commande du dispositif de changement de vitesse interne du moyeu de roue pour une opération d'embrayage selon la revendication 7, dans lequel la première unité magnétique (71) est un aimant permanent ou un électroaimant qui a un pôle S et un pôle N.

10. Dispositif de commande du dispositif de changement de vitesse interne du moyeu de roue pour une opération d'embrayage selon la revendication 7, dans lequel le coulisseau à griffes de commande (2) s'étend depuis une extrémité avant du levier (3).

11. Dispositif de commande du dispositif de changement de vitesse interne du moyeu de roue pour une opération d'embrayage selon la revendication 7, dans lequel la traversée électrique (6) entoure le côté extérieur du manchon de levier (5).

12. Dispositif de commande du dispositif de changement de vitesse interne du moyeu de roue pour une opération d'embrayage selon la revendication 9,
dans lequel le coulisseau électrique (4) est configuré pour être entraîné, lorsque la bague de commande (7) tourne selon un angle prédéterminé pour faire tourner le pôle S de la première unité magnétique (71) jusque sur une position localisant la deuxième unité magnétique (42) du coulisseau électrique (4), à des fins de déplacement vers l'arrière sous l'effet d'une force d'attraction ou de répulsion entre le pôle S de la première unité magnétique (71) et la deuxième unité magnétique (42) afin d'entraîner le levier (3) à se déplacer vers l'arrière dans une direction axiale ; et
dans lequel le coulisseau électrique (4) est configuré pour être entraîné, lorsque la bague de commande (7) tourne successivement selon l'angle prédéterminé pour faire tourner le pôle N de la première unité magnétique (71) jusque sur une position localisant la deuxième unité magnétique (42) du coulisseau électrique (4), à des fins de déplacement vers l'avant sous l'effet d'une force d'attraction ou de répulsion entre le pôle N de la première unité magnétique (71) et la deuxième unité magnétique (42) de manière à entraîner le levier (s3) à se déplacer vers l'avant dans la direction axiale.

13. Dispositif de commande du dispositif de changement de vitesse interne du moyeu de roue pour une opération d'embrayage selon la revendication 7, dans lequel un côté extérieur dudit au moins un trou d'installation (52) est fermé par un couvercle de type manchon (50).
